# EUROPÄISCHE PATENTSCHRIFT

(11) **EP 3 314 030 B1**
(45) Veröffentlichungstag und Bekanntmachung des Hinweises auf die Patenterteilung: **03.08.2022**
(21) Anmeldenummer: 16731933.4
(22) Anmeldetag: 27.06.2016
(51) Int. Cl.: C22B 7/00, C22B 15/00, C22B 1/00

(54) **VORRICHTUNG UND ANORDNUNG ZUR METALLURGISCHEN BEHANDLUNG VON ELEKTRO- UND/ODER ELEKTRONIKSCHROTT BZW. -KOMPONENTEN SOWIE DEREN VERWENDUNGEN UND VERFAHREN ZUR METALLURGISCHEN BEHANDLUNG VON ELEKTRO- UND/ODER ELEKTRONIKSCHROTT BZW. -KOMPONENTEN**
APPARATUS AND ARRANGEMENT FOR THE METALLURGICAL TREATMENT OF ELECTRICAL AND/OR ELECTRONIC SCRAP OR COMPONENTS AND USES THEREOF AND METHODS FOR THE METALLURGICAL TREATMENT OF ELECTRICAL AND/OR ELECTRONIC SCRAP OR COMPONENTS
DISPOSITIF ET AGENCEMENT POUR LE TRAITEMENT MÉTALLURGIQUE DE DÉCHETS OU DE COMPOSANTS ÉLECTRIQUES ET/OU ÉLECTRONIQUES AINSI QUE LEURS UTILISATIONS ET PROCÉDÉS POUR LE TRAITEMENT MÉTALLURGIQUE DE DÉCHETS OU DES COMPOSANTS ÉLECTRIQUES ET/OU ÉLECTRONIQUES

(30) Priorität: 29.06.2015 AT 505632015
(43) Veröffentlichungstag der Anmeldung: 02.05.2018
(73) Patentinhaber: Urbangold GmbH, 8700 Leoben (AT)
(72) Erfinder: FILZWIESER, Andreas, 8712 Proleb (AT); FILZWIESER, Iris, 8712 Proleb (AT); KONETSCHNIK, Stefan, 8700 Leoben (AT); STIBICH, Robert, 6230 Brixlegg (AT)
(74) Vertreter: Wirnsberger & Lerchbaum Patentanwälte OG
(86) Internationale Anmeldenummer: PCT/EP2016/064769
(87) Internationale Veröffentlichungsnummer: WO 2017/001306

(56) Entgegenhaltungen:
- WO-A1-2010/136403
- AT-B- 243 451
- CN-B- 102 978 405
- US-A1- 2014 087 321

## Beschreibung

### GEBIET DER ERFINDUNG

Die vorliegende Erfindung betrifft eine Vorrichtung sowie eine Anordnung zur (pyro)metallurgischen Behandlung von Elektro- und/oder Elektronikschrott bzw. -komponenten, die insbesondere so konfiguriert sind, dass im Wesentlichen reiner Elektro- und/oder Elektronikschrott bzw. Komponenten davon ohne Beimengungen verarbeitet werden kann. Weiterhin betrifft die vorliegende Erfindung die Verwendung der Vorrichtung bzw. der Anordnung zur metallurgischen Behandlung von Elektro- und/oder Elektronikschrott bzw. -komponenten sowie zur Gewinnung von Rohkupfer oder einer Vorstufe davon. Darüber hinaus betrifft die vorliegende Erfindung Verfahren zur (pyro)metallurgischen Behandlung von Elektro- und/oder Elektronikschrott bzw. -komponenten.

### HINTERGRUND

Angesichts der immer weiteren Verbreitung von elektrischen und elektronischen Geräten im täglichen Leben nimmt dementsprechend auch der Abfall an elektrischen und elektronischen Geräten mehr und mehr zu. Dies stellt die Gesellschaft nicht nur vor die Herausforderung, dass eine beträchtliche Menge an elektrischen und elektronischen Altgeräten fachgerecht entsorgt werden muss, sondern auch dass in solchen Abfällen enthaltene wertvolle Metalle, deren natürlich vorkommenden Ressourcen in der Regel begrenzt sind, weitestgehend zurückgewonnen werden sollten. Elektrische und elektronische Geräten weisen üblicherweise einen überproportional hohen Gehalt an Edelmetallen, aber auch an Seltenerdelementen, Indium, Gallium und Germanium auf, deren Ressourcen besonders begrenzt sind bzw. deren Verfügbarkeit geopolitischen Beeinträchtigungen unterliegt, so dass gerade die Rückgewinnung solcher strategisch wichtiger Elemente von großem wirtschaftlichen Interesse ist. Zum Zweck der Vermeidung von Abfällen von Elektro- und Elektronikgeräten und darüber hinaus der Wiederverwendung, des Recyclings und anderer Formen der Verwertung solcher Abfälle, um die zu beseitigende Abfallmenge zu reduzieren, wurde beispielsweise die EU-Richtlinie 2002/96/EG erlassen, die im allgemeinen Sprachgebrauch auch als WEEE-Richtlinie (*Waste of Electrical and Electronic Equipment*) bezeichnet wird.

Üblicherweise werden elektrische und elektronische Altgeräte, im Folgenden als Elektro- und/oder Elektronikschrott bezeichnet, in Schredder- und/oder Sortieranlagen vorbehandelt. Die - nach Abtrennung der magnetischen Fraktion, sowie der aluminiumreichen Fraktion und sortenreiner Kunststofffraktionen - verbleibenden Elektro- und/oder Elektronikkomponenten können metallurgisch weiter verarbeitet werden. Allerdings besteht gerade bei der metallurgischen Aufarbeitung des Elektro- und/oder Elektronikschrott bzw. der -komponenten, zur Rückgewinnung bzw. zum Recycling von Wertmetallen das technische Problem, dass die bisher hierfür verwendeten Vorrichtungen lediglich Elektro- und/oder Elektronikschrott bzw. -komponenten mit geringem Gehalt an organischen Bestandteilen und/oder im Gemisch mit Beimengungen, d.h. Zuschlagstoffe, die kein Elektro- und/oder Elektronikschrott bzw. -komponenten sind, verarbeiten können. Bei diesen Beimengungen handelt es sich üblicherweise um Kupferschrott mit hohem Kupferanteil (meist mehr als 85 Gew.-%), was im Allgemeinen zu einer Kostensteigerung führt. Die Zugabe von Beimengungen kann insbesondere deshalb erforderlich sein, da Elektro- und/oder Elektronikschrott bzw. -komponenten üblicherweise einen relativ hohen Anteil an Kunststoffen oder sonstigen Materialien mit einem Brennwert aufweisen, die bei einer pyrometallurgischen Aufarbeitung verbrennen und dabei so viel thermische Energie freisetzen können, dass die Gefahr eines Überhitzens der Apparatur bestehen kann. Diese erforderlichen Beimengungen können daher auch als Kühlschrott bezeichnet werden.

Aus der CN 102978405 B ist ein Herd-Schachtofen, welcher in zwei Bereiche unterteilt ist, bekannt.

In der WO 2010/136403 A1 ist eine Kühleinrichtung für einen metallurgischen Ofen offenbart.

Aus der US 2014/0087321 A1 ein metallurgisches Schmelzsystem, umfassend einen Induktionsofen, bekannt.

Schließlich ist aus der AT 243451 B ein Schachtofen zum Schmelzen und Verarbeiten von verglasbaren Produkten bekannt, bei welchem während dem Betrieb an den Metallwandungen der Schmelzwanne eine poröse Schicht aus erstarrtem Glas mit regelbarer Dicke angelagert wird.

### AUFGABE DER ERFINDUNG

Eine Aufgabe der vorliegenden Erfindung ist es daher eine Vorrichtung und Verfahren zur metallurgischen Behandlung von Elektro- und/oder Elektronikschrott bzw. -komponenten bereitzustellen, die in der Lage sind, im Wesentlichen ausschließlich Elektro- und/oder Elektronikschrott bzw. - komponenten ohne Beimengungen verarbeiten zu können. Weiterhin ist es eine Aufgabe der vorliegenden Erfindung, eine Vorrichtung und Verfahren bereitzustellen, die eine metallurgische Behandlung von Elektro- und/oder Elektronikschrott bzw. -komponenten in einer möglichst energieeffizienten und umweltschonenden Weise ermöglichen.

### ZUSAMMENFASSUNG DER ERFINDUNG

Die Erfinder der vorliegenden Erfindung haben umfangreiche Studien zur Lösung dieser Aufgaben durchgeführt und insbesondere herausgefunden, dass durch intensive Kühlung des Schmelzreaktors und des darin enthaltenen Schmelzgutes bei dem Einsatz von im Wesentlichen reinem Elektro- und/oder Elektronikschrott bzw. -komponenten mit entsprechend hohen Gehalten an organischem Material, wie zum Beispiel Kunststoffe, als Ausgangsstoffe die bei der pyrometallurgischen Behandlung entstehende thermische Energie abgeführt werden kann und somit ein Eintrag von im Wesentlichen reinem Elektro- und/oder Elektronikschrott bzw. -komponenten ohne die Notwendigkeit von Beimengungen zur Kühlung, wie Kühlschrott, möglich ist. Dementsprechend sieht die erfindungsgemäße Vorrichtung zur metallurgischen Behandlung von Elektro- und/oder Elektronikschrott bzw. -komponenten den Einsatz eines (aktiv) kühlbaren Schmelzreaktors vor.

Insbesondere betrifft die vorliegende Erfindung eine Vorrichtung zur metallurgischen (insbesondere pyrometallurgischen) Behandlung von Elektro- und/oder Elektronikschrott bzw. -komponenten, wobei die Vorrichtung einen Schmelzreaktor umfasst, der eine Kühleinrichtung aufweist, und wobei die Vorrichtung zur metallurgischen Behandlung von bis zu 100 Gew.-% Elektro- und/oder Elektronikschrott bzw. -komponenten konfiguriert ist, wobei der Schmelzreaktor mit Seitenwänden und einem Boden ausgebildet ist und wobei sich die Kühleinrichtung in mindestens einer der Seitenwände des Schmelzreaktors befindet.

Des Weiteren betrifft die vorliegende Erfindung eine Anordnung zur metallurgischen Behandlung von Elektro- und/oder Elektronikschrott bzw. -komponenten, wobei die Anordnung eine erfindungsgemäße Vorrichtung und eine Abgasreinigungseinrichtung, die in fluider Kommunikation mit der Vorrichtung ist, umfasst.

Die erfindungsgemäße Vorrichtung sowie die erfindungsgemäße Anordnung können in vielfältigen Anwendungen zum Einsatz kommen, insbesondere zur metallurgischen Behandlung von Elektro- und/oder Elektronikschrott bzw. -komponenten bzw. zur Gewinnung von Rohkupfer oder einer Vorstufe davon.

Dementsprechend betrifft die vorliegende Erfindung auch die Verwendung der erfindungsgemäßen Vorrichtung bzw. der erfindungsgemäßen Anordnung zur metallurgischen Behandlung eines zu behandelnden Guts und/oder zur Gewinnung von Rohkupfer oder einer Vorstufe davon, wobei das zu behandelnde Gut bis zu 100 Gew.-% Elektro- und/oder Elektronikschrott bzw. -komponenten enthält.

Weiterhin betrifft die vorliegende Erfindung die Verwendung der erfindungsgemäßen Vorrichtung bzw. der erfindungsgemäßen Anordnung zur Gewinnung (Erzeugung, Herstellung) von Rohkupfer oder einer Vorstufe davon.

Darüber hinaus betrifft die vorliegende Erfindung ein Verfahren zur metallurgischen (insbesondere pyrometallurgischen) Behandlung von Elektro- und/oder Elektronikschrott bzw. -komponenten mit einem Schmelzreaktor, wobei der Schmelzreaktor so konfiguriert ist, dass bis zu 100 Gew.-% Elektro- und/oder Elektronikschrott bzw. -komponenten eingesetzt werden kann, wobei der Schmelzreaktor mit Seitenwänden und einem Boden ausgebildet ist und wobei sich die Kühleinrichtung in mindestens einer der Seitenwände des Schmelzreaktors befindet. Der Schmelzreaktor kann insbesondere Teil einer erfindungsgemäßen Vorrichtung sein bzw. das Verfahren kann insbesondere mittels einer erfindungsgemäßen Vorrichtung durchgeführt werden.

Weitere Aufgaben und Vorteile von Ausführungsformen der vorliegenden Erfindung werden an Hand der folgenden detaillierten Beschreibung und der beigefügten Figuren ersichtlich.

### KURZE BESCHREIBUNG DER FIGUREN

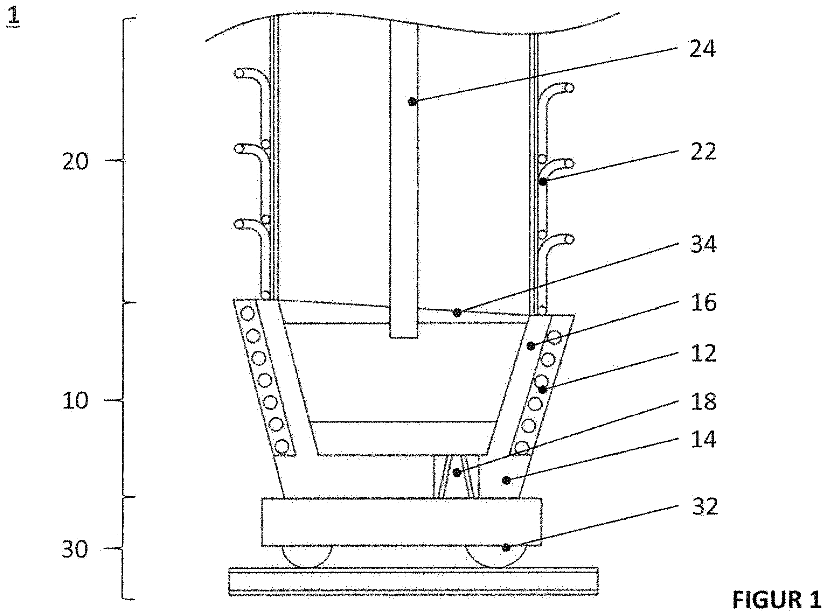

Figur 1 zeigt eine Seitenansicht eines Teils einer Vorrichtung zur metallurgischen Behandlung von Elektro- und/oder Elektronikschrott bzw. -komponenten gemäß einer beispielhaften Ausführungsform.

### DETAILLIERTE BESCHREIBUNG DER ERFINDUNG

Im Folgenden werden nähere Details der vorliegenden Erfindung und weitere Ausführungsformen davon beschrieben. Die vorliegende Erfindung ist jedoch nicht auf die folgende detaillierte Beschreibung oder auf die Figuren beschränkt, sondern sie dienen lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform der erfindungsgemäßen Vorrichtung beschrieben werden, mit jeder anderen beispielhaften Ausführungsform der erfindungsgemäßen Vorrichtung sowie mit jeder beispielhaften Ausführungsform der Anordnung, von Verwendungen davon oder jeder beispielhaften Ausführungsform des erfindungsgemäßen Verfahrens kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Der Ausdruck "umfassen", wie er hier verwendet wird, schließt nicht nur die Bedeutung von "enthalten" oder "beinhalten" ein, sondern kann auch "bestehen aus" und "im Wesentlichen bestehen aus" bedeuten.

Die Vorrichtung zur metallurgischen Behandlung von Elektro- und/oder Elektronikschrott bzw. -komponenten umfasst einen Schmelzreaktor, der eine Kühleinrichtung aufweist, und ist zur metallurgischen Behandlung von bis zu 100 Gew.-% Elektro- und/oder Elektronikschrott bzw. -komponenten konfiguriert.

Die Vorrichtung kann insbesondere zur pyrometallurgischen Behandlung oder Verarbeitung von Elektro- und/oder Elektronikschrott bzw. -komponenten geeignet sein. Insbesondere kann der Elektro- und/oder Elektronikschrott bzw. die -komponenten thermisch in der bzw. mittels der Vorrichtung bearbeitet werden. Dies kann insbesondere eine thermische Zersetzung oder Verbrennung von organischen Bestandteilen des bzw. der Elektro- und/oder Elektronikschrotts bzw. der -komponenten, wie zum Beispiel von Kunststoffen, oder sonstiger brennbarer Komponenten beinhalten. Weiterhin kann dies insbesondere ein teilweises oder vollständiges Aufschmelzen der metallischen Bestandteile des bzw. der Elektro- und/oder Elektronikschrotts bzw. der - komponenten beinhalten. Ferner kann dies eine oxidative und/oder eine reduktive Behandlung der metallischen Bestandteile des bzw. der Elektro- und/oder Elektronikschrotts bzw. der -komponenten beinhalten. Des Weiteren kann dies eine Seigerung (Entmischung einer Schmelze) beinhalten.

Unter "Elektro- und/oder Elektronikschrott" im Sinne der vorliegenden Anmeldung werden insbesondere Produkte, Altgeräte und Teile sowie Konzentrate davon gemäß der WEEE-Richtlinie (EU-Richtlinie 2002/96/EG) verstanden. Hierzu zählen insbesondere die folgenden Gegenstände:
1. Haushaltsgroßgeräte, wie insbesondere große Kühlgeräte; Kühlschränke; Gefriergeräte; sonstige Großgeräte zur Kühlung, Konservierung und Lagerung von Lebensmitteln; Waschmaschinen; Wäschetrockner; Geschirrspüler; Herde und Backöfen; elektrische Kochplatten; elektrische Heizplatten; Mikrowellengeräte; sonstige Großgeräte zum Kochen oder zur sonstigen Verarbeitung von Lebensmitteln; elektrische Heizgeräte; elektrische Heizkörper; sonstige Großgeräte zum Beheizen von Räumen, Betten und Sitzmöbeln; elektrische Ventilatoren; Klimageräte; sonstige Belüftungs-, Entlüftungs- und Klimatisierungsgeräte
2. Haushaltskleingeräte, wie insbesondere Staubsauger; Teppichkehrmaschinen; sonstige Reinigungsgeräte; Geräte zum Nähen, Stricken, Weben oder zur sonstigen Bearbeitung von Textilien; Bügeleisen und sonstige Geräte zum Bügeln, Mangeln oder zur sonstigen Pflege von Kleidung; Toaster; Fritteusen; Mühlen, Kaffeemaschinen und Geräte zum Öffnen oder Verschließen von Behältnissen oder Verpackungen; elektrische Messer; Haarschneidegeräte, Haartrockner, elektrische Zahnbürsten, Rasierapparate, Massagegeräte und sonstige Geräte für die Körperpflege; Wecker, Armbanduhren und Geräte zum Messen, Anzeigen oder Aufzeichnen der Zeit; Waagen
3. IT- und Telekommunikationsgeräte und Komponenten davon, wie insbesondere Großrechner; Minicomputer; Drucker; PCs (einschließlich CPU, Maus, Bildschirm und Tastatur); Laptops (einschließlich CPU, Maus, Bildschirm und Tastatur); Leiterplatten; Notebooks; elektronische Notizbücher; Drucker; Kopiergeräte; elektrische und elektronische Schreibmaschinen; Taschen- und Tischrechner; sonstige Produkte und Geräte zur Erfassung, Speicherung, Verarbeitung, Darstellung oder Übermittlung von Informationen mit elektronischen Mitteln; Benutzerendgeräte und -systeme; Faxgeräte; Telexgeräte; Telefone; Münz- und Kartentelefone; schnurlose Telefone; Mobiltelefone; Anrufbeantworter; sonstige Produkte oder Geräte zur Übertragung von Tönen, Bildern oder sonstigen Informationen mit Telekommunikationsmitteln
4. Geräte der Unterhaltungselektronik, wie insbesondere Radiogeräte; Fernsehgeräte; Videokameras; Videorekorder; Hi-Fi-Anlagen; Audio-Verstärker; Musikinstrumente; sonstige Produkte oder Geräte zur Aufnahme oder Wiedergabe von Tönen oder Bildern, einschließlich Signalen, oder andere Technologien zur Übertragung von Tönen und Bildern mit anderen als Telekommunikationsmitteln
5. Beleuchtungskörper, wie insbesondere Leuchten für Leuchtstofflampen mit Ausnahme von Leuchten in Haushalten; stabförmige Leuchtstofflampen; Kompaktleuchtstofflampen; Entladungslampen, einschließlich Hochdruck-Natriumdampflampen und Metalldampflampen; Niederdruck-Natriumdampflampen; sonstige Beleuchtungskörper oder Geräte für die Ausbreitung oder Steuerung von Licht mit Ausnahme von Glühlampen
6. Elektrische und elektronische Werkzeuge, wie insbesondere Bohrmaschinen; Sägen; Nähmaschinen; Geräte zum Drehen, Fräsen, Schleifen, Zerkleinern, Sägen, Schneiden, Abscheren, Bohren, Lochen, Stanzen, Falzen, Biegen oder zur entsprechenden Bearbeitung von Holz, Metall und sonstigen Werkstoffen; Niet-, Nagel- oder Schraubwerkzeuge oder Werkzeuge zum Lösen von Niet-, Nagel- oder Schraubverbindungen oder für ähnliche Verwendungszwecke; Schweiß- und Lötwerkzeuge oder Werkzeuge für ähnliche Verwendungszwecke; Geräte zum Versprühen, Ausbringen, Verteilen oder zur sonstigen Verarbeitung von flüssigen oder gasförmigen Stoffen mit anderen Mitteln; Rasenmäher und sonstige Gartengeräte
7. Spielzeug sowie Sport- und Freizeitgeräte, wie insbesondere elektrische Eisenbahnen oder Autorennbahnen; Videospielkonsolen; Videospiele; Fahrrad-, Tauch-, Lauf-, Rudercomputer usw.; Sportausrüstung mit elektrischen oder elektronischen Bauteilen; Geldspielautomaten
8. Medizinische Geräte, wie insbesondere Geräte für Strahlentherapie; Kardiologiegeräte; Dialysegeräte; Beatmungsgeräte; nuklearmedizinische Geräte; Laborgeräte für In-vitro-Diagnostik; Analysegeräte; Gefriergeräte; Fertilisations-Testgeräte; sonstige Geräte zur Erkennung, Vorbeugung, Überwachung, Behandlung oder Linderung von Krankheiten, Verletzungen oder Behinderungen
9. Überwachungs- und Kontrollinstrumente, wie insbesondere Rauchmelder; Heizregler; Thermostate; Geräte zum Messen, Wiegen oder Regeln in Haushalt und Labor; sonstige Überwachungs- und Kontrollinstrumente von Industrieanlagen (z. B. in Bedienpulten)
10. Automatische Ausgabegeräte, wie insbesondere Heißgetränkeautomaten; Automaten für heiße oder kalte Flaschen oder Dosen; Automaten für feste Produkte; Geldautomaten; sonstige Geräte zur automatischen Abgabe von Produkten

Der Elektro- und/oder Elektronikschrott bzw. die -komponenten kann insbesondere, aber nicht ausschließlich eines oder mehrere der folgenden Metalle enthalten: Kupfer (Cu), Nickel (Ni), Zinn (Sn), Zink (Zn), Blei (Pb), Antimon (Sb), Gold (Au), Silber (Ag), Platin (Pt), Palladium (Pd), Indium (In), Gallium (Ga), Rhenium (Re) und/oder Seltenerdmetalle, einschließlich Yttrium (Y).

In einer Ausführungsform kann das zu behandelnde Gut, wie der Elektro- und/oder Elektronikschrott bzw. die -komponenten, vor der metallurgischen Behandlung zerkleinert bzw. geschreddert werden, insbesondere kann das zu behandelnde Gut, wie der Elektro- und/oder Elektronikschrott bzw. die - komponenten, der Vorrichtung in zerkleinerter bzw. geschredderter Form zugeführt werden.

Die Vorrichtung zur metallurgischen Behandlung von Elektro- und/oder Elektronikschrott bzw. -komponenten ist zur metallurgischen Behandlung von bis zu 100 Gew.-% Elektro- und/oder Elektronikschrott bzw. -komponenten in dem zu behandelnden Gut konfiguriert. In anderen Worten ist die Vorrichtung zur metallurgischen Behandlung von Elektro- und/oder Elektronikschrott so konfiguriert, dass der Anteil an Elektro- und/oder Elektronikschrott an dem zu behandelnden Gut bis zu 100 Gew.-% betragen kann. Insbesondere kann das in der Vorrichtung zu behandelnde Gut mindestens 50 Gew.-% Elektro- und/oder Elektronikschrott bzw. -komponenten, insbesondere mindestens 60 Gew.-% Elektro- und/oder Elektronikschrott bzw. -komponenten, insbesondere mindestens 70 Gew.-% Elektro- und/oder Elektronikschrott bzw. -komponenten, insbesondere mindestens 80 Gew.-% Elektro- und/oder Elektronikschrott bzw. -komponenten, insbesondere mindestens 90 Gew.-% Elektro- und/oder Elektronikschrott bzw. -komponenten, insbesondere mindestens 95 Gew.-% Elektro- und/oder Elektronikschrott bzw. - komponenten, insbesondere mindestens 98 Gew.-% Elektro- und/oder Elektronikschrott bzw. -komponenten, umfassen.

In manchen Ausführungsformen kann es vorteilhaft sein, dem in der Vorrichtung zu behandelnden Gut neben dem Elektro- und/oder Elektronikschrott bzw. den -komponenten weitere Zuschlagstoffe, wie zum Beispiel einen Eisenträger, Kupfer, Kalkstein und/oder Quarz, zuzufügen. Dies kann beispielsweise zur Erniedrigung des Schmelzpunkts des zu behandelnden Guts, beispielsweise unter Ausbildung eines Eutektikums oder einer Schmelzrinne, führen. Somit kann das zu behandelnde Gut in manchen Ausführungsformen auch weniger als 100 Gew.-% Elektro- und/oder Elektronikschrott bzw. -komponenten, insbesondere weniger als 99 Gew.-% Elektro- und/oder Elektronikschrott bzw. -komponenten, insbesondere weniger als 98 Gew.-% Elektro- und/oder Elektronikschrott bzw. -komponenten, insbesondere weniger als 95 Gew.-% Elektro- und/oder Elektronikschrott bzw. -komponenten, insbesondere weniger als 90 Gew.-% Elektro- und/oder Elektronikschrott bzw. -komponenten, insbesondere weniger als 85 Gew.-% Elektro- und/oder Elektronikschrott bzw. -komponenten, insbesondere weniger als 80 Gew.-% Elektro- und/oder Elektronikschrott bzw. -komponenten, umfassen.

Sämtliche der oben genannten Untergrenzen und Obergrenzen des Anteils von Elektro- und/oder Elektronikschrott bzw. -komponenten an dem zu behandelnden Gut können beliebig miteinander kombiniert werden, soweit denkgesetzlich möglich.

Die Vorrichtung zur metallurgischen Behandlung von Elektro- und/oder Elektronikschrott bzw. -komponenten umfasst einen Schmelzreaktor, der eine Kühleinrichtung aufweist.

Der Schmelzreaktor kann insbesondere zum Schmelzen des bzw. der Elektro- und/oder Elektronikschrotts bzw. der -komponenten konfiguriert sein. Weiterhin kann der Schmelzreaktor zum Durchführen einer (chemischen) Reaktion bei (an, mit) dem Elektro- und/oder Elektronikschrott bzw. - komponenten konfiguriert sein. Insbesondere kann der Schmelzreaktor so konfiguriert sein, dass das zu behandelnde Gut, wie der Elektro- und/oder Elektronikschrott bzw. -komponenten, (zumindest teilweise) aufgeschmolzen wird bzw. in eine Schmelze überführt wird sowie dass eine chemische Reaktion an dem aufgeschmolzenen zu behandelnden Gut, wie der Elektro- und/oder Elektronikschrott bzw. -komponenten, durchgeführt wird, wie zum Beispiel eine oxidative Reaktion (Verbrennung) an organischem Material, wie zum Beispiel Kunststoffe, und/oder eine reduktive Reaktion von zum Beispiel ggf. vorliegenden Metalloxiden.

Der Schmelzreaktor weist einen Boden und Seitenwände, beispielsweise vier Seitenwände, auf. Beispielsweise kann der Schmelzreaktor in etwa wannenförmig bzw. trogförmig ausgebildet sein.

Die Kühleinrichtung kann insbesondere zum (aktiven) Kühlen des Schmelzreaktors und/oder des darin enthaltenen Guts, wie des bzw. der Elektro- und/oder Elektronikschrotts bzw. der -komponenten, konfiguriert sein. Unter einem "(aktiven) Kühlen" im Sinne der vorliegenden Anmeldung kann insbesondere verstanden werden, dass ohne das Vorhandensein der Kühleinrichtung die Temperatur des Schmelzreaktors und/oder des darin enthaltenen Guts höher wäre als bei Vorhandensein der Kühleinrichtung. Ein "(aktives) Kühlen" im Sinne der vorliegenden Anmeldung ist insbesondere von einem passiven Kühlen oder einem (Ab)Kühlen lassen zu unterscheiden. Insbesondere kann die Kühleinrichtung so konfiguriert sein, dass sie die Temperatur des Schmelzreaktors und/oder des darin enthaltenen Guts, wie des bzw. der Elektro- und/oder Elektronikschrotts bzw. der -komponenten, senken kann und/oder einen Anstieg der Temperatur des Schmelzreaktors und/oder des darin enthaltenen Guts, wie des bzw. der Elektro- und/oder Elektronikschrotts bzw. der -komponenten, verlangsamen bzw. verringern kann.

In einer Ausführungsform kann sich die Kühleinrichtung in sämtlichen Seitenwänden des Schmelzreaktors, befinden. Insbesondere kann der Schmelzreaktor im Wesentlichen vollständig als gekühlte Konstruktion ausgebildet sein.

Zum Beispiel kann die Kühleinrichtung ein System an Rohren, Leitungen oder dergleichen umfassen, durch die ein Kühlmedium geleitet werden kann.

Insbesondere kann die Kühleinrichtung ein (fließfähiges) Kühlmedium umfassen.

In einer Ausführungsform kann die Kühleinrichtung zum Kühlen mittels einer ionischen Flüssigkeit geeignet bzw. konfiguriert sein. Insbesondere kann die Kühleinrichtung ein Kühlmedium enthalten, wie zum Beispiel eine ionische Flüssigkeit, Weitere geeignete Kühlmedien beinhalten Wasser, Öle, Salzschmelzen, niedrigschmelzende Metalle, niedrigschmelzende Legierungen und Kombinationen hiervon. Dementsprechend kann in einer Ausführungsform die Kühleinrichtung auch zum Kühlen mittels Wasser, Öle, Salzschmelzen, niedrigschmelzende Metalle, niedrigschmelzende Legierungen und Kombinationen hiervon geeignet bzw. konfiguriert sein.

Eine "ionische Flüssigkeit" im Sinne der vorliegenden Anmeldung kann ausschließlich Ionen enthalten und insbesondere ein Salz oder Salzgemisch sein, das bei Temperaturen unter 200 °C, insbesondere unter 100 °C, in einem flüssigen Aggregatszustand vorliegt, ohne dass das Salz oder Salzgemisch dabei in einem Lösungsmittel wie Wasser gelöst ist. Ein Beispiel für die Kühlung eines metallurgischen Ofens mittels einer ionischen Flüssigkeit findet sich in der AT 508 292 A1, deren Offenbarung hiermit unter Bezugnahme vollständig aufgenommen wird.

In einer Ausführungsform umfasst die Vorrichtung ferner einen Abgasschacht, der über dem Schmelzreaktor angeordnet ist. Insbesondere kann der Abgasschacht unmittelbar (ohne ein dazwischen befindliches Element) über dem Schmelzreaktor angeordnet sein. Insbesondere können der Abgasschacht und der Schmelzreaktor (an einer gedachten Schnittlinie) aneinander grenzen. Insbesondere können der Abgasschacht und der Schmelzreaktor miteinander verbunden bzw. aneinander befestigt sein. Der an dem Schmelzreaktor angrenzende (untere) Querschnitt des Abgasschachtes kann im Wesentlichen dem an dem Abgasschacht angrenzenden (oberen) Querschnitt des Schmelzreaktors entsprechen. Der Abgasschacht kann insbesondere einen im Wesentlichen rechteckigen Querschnitt aufweisen.

In einer Ausführungsform kann der Abgasschacht als Abhitzekessel (bzw. als Abhitzedampferzeuger) ausgestaltet sein. Insbesondere kann der Abgasschacht im Wesentlichen vollständig als Abhitzekessel ausgestaltet sein. Insbesondere kann der Abgasschacht ein Teil eines Abhitzekessels sein. Insbesondere kann die durch die Kühleinrichtung des Schmelzreaktors hervorgerufene Kühlung eine unmittelbare Anordnung des Abhitzekessels an dem Schmelzreaktor ermöglichen oder begünstigen. Der Abhitzekessel kann insbesondere zur Rückgewinnung von Abwärme, insbesondere zur Verstromung von Abwärme, konfiguriert sein. Hierdurch kann es möglich sein, die bei der metallurgischen Behandlung von Elektro- und/oder Elektronikschrott bzw. -komponenten auftretende bzw. freigesetzte thermische Energie weiter abzuführen, um zum Beispiel ein Überhitzen der Vorrichtung zu vermeiden. Darüber hinaus kann es hierdurch möglich sein, die bei der metallurgischen Behandlung von Elektro- und/oder Elektronikschrott bzw. - komponenten auftretende bzw. freigesetzte thermische Energie sinnvoll weiterzunutzen, wie zum Beispiel zur Verstromung der Abwärme. Hierdurch kann es somit möglich sein, die Energieeffizienz der Vorrichtung zur metallurgischen Behandlung von Elektro- und/oder Elektronikschrott bzw. - komponenten zu steigern, was sowohl im Hinblick auf die Wirtschaftlichkeit der Vorrichtung als auch unter Umweltschutzgründen Vorteile bieten kann.

Das Hohlraumvolumen des Abgasschachtes bzw. des Abhitzekessels kann deutlich größer als das Hohlraumvolumen des Schmelzreaktors sein. Unter "Hohlraumvolumen" sei im Sinne der vorliegenden Anmeldung insbesondere das Volumen des Innenraums von zum Beispiel dem Abgasschacht bzw. dem Schmelzreaktor verstanden. Insbesondere kann das Verhältnis von Hohlraumvolumen des Abgasschachtes bzw. des Abhitzekessels zu Hohlraumvolumen des Schmelzreaktors größer als 2, insbesondere größer als 3, insbesondere größer als 4, insbesondere größer als 5, insbesondere größer als 6, insbesondere größer als 8, insbesondere größer als 10, und insbesondere kleiner als 100, insbesondere kleiner als 50, sein. Ein im Vergleich zu herkömmlichen Vorrichtungen großer Abgasschacht kann insbesondere in der Lage sein, eine große Gasmenge, die bei der Verbrennung von organischem Material, wie zum Beispiel bei der metallurgischen Behandlung von bis zu 100 Gew.-% Elektro- und/oder Elektronikschrott bzw. - komponenten, entsteht, abzuführen.

In einer Ausführungsform kann die Vorrichtung ferner eine Zuführeinrichtung für Gase und feinkörnige Feststoffe, insbesondere für Luft und/oder einen Brennstoff, aufweisen. In manchen Ausführungsformen kann die Zuführung von Luft oder ein anderes sauerstoffhaltiges Gas die Verbrennung von organischem Material, wie zum Beispiel Kunststoff, des bzw. der Elektro- und/oder Elektronikschrotts bzw. -komponenten fördern. In manchen Ausführungsformen kann es sinnvoll sein, zusätzlich einen (feinkörnigen) Brennstoff oder ein brennbaren Gases, wie zum Beispiel Erdgas oder auch Kohlestaub, zuzugeben, zum Beispiel um die Temperatur in der Vorrichtung zu regeln bzw. zu steuern. In manchen Ausführungsformen kann es auch möglich sein, einen Anteil des bzw. der zu behandelnden Elektro- und/oder Elektronikschrotts bzw. -komponenten, zum Beispiel bis zu 15 %, insbesondere 1 bis 10 %, der Gesamtmenge, über die Zuführeinrichtung für Gase und feinkörnige Feststoffe einzubringen.

Die Zuführeinrichtung für Gase und feinkörnige Feststoffe kann insbesondere als eine Lanze oder als ein Rohr ausgestaltet sein, die bzw. das in den Schmelzreaktor hineinragen kann. Alternativ kann die Zuführeinrichtung für Gase und feinkörnige Feststoffe auch beispielsweise als eine oder mehrere Düsen, als Impulsbrenner oder als Plasmabrenner ausgestaltet sein.

In einer Ausführungsform kann der Schmelzreaktor eine bodenseitige Gaszuführeinrichtung, insbesondere für ein reduzierendes Gas, wie Wasserstoff, aufweisen. In manchen Ausführungsform kann die Zuführung eines reduzierenden Gases, wie zum Beispiel Wasserstoff, Erdgas oder auch Spaltgas, wobei jeweils auch eine Beimischung von Stickstoff, Argon und/oder Luft möglich ist, in den Schmelzreaktor bzw. in das darin befindliche Gut (z.B. das Schmelzgut) sinnvoll sein, zum Beispiel zur Reduktion von ggf. vorliegenden Metalloxiden in der Schmelze, was zu einer Erhöhung der Ausbeute an aus dem Elektro- und/oder Elektronikschrott bzw. den - komponenten rückgewonnenen Metallen führen kann.

Die bodenseitige Gaszuführeinrichtung kann insbesondere Spülsteine umfassen. Die Spülsteine können insbesondere poröse Spülsteine sein. Sie können aber auch gerichtete Spülsteine (z.B. in Form von Röhrchen) sein.

In einer Ausführungsform kann der Schmelzreaktor von der Vorrichtung lösbar, insbesondere auswechselbar, angebracht sein. Wie oben beschrieben, kann der Schmelzreaktor an einem Abgasschacht befestigt sein. Die Befestigung kann insbesondere lösbar sein. Eine zwischen dem Abgasschacht und dem Schmelzreaktor gedachte Schnittlinie kann insbesondere schräg (geneigt) verlaufen, um ein Auswechseln des Schmelzreaktors zu erleichtern. Eine Auswechselbarkeit des Schmelzreaktors kann insbesondere zu einer Verkürzung von Standzeiten bei Wartung und/oder Reparatur des Schmelzreaktors führen, da ein zu wartender bzw. zu reparierender Schmelzreaktor in einfacher Weise durch einen weiteren (funktionstüchtigen) Schmelzreaktor ausgetauscht werden kann. Ein lange Standzeit der Vorrichtung und die hiermit verbundenen Produktionsausfälle können hiermit weitgehend vermieden werden. Eine einfache Auswechselbarkeit kann insbesondere dadurch ermöglicht sein, dass der Abgasschacht bzw. der Abhitzekessel unmittelbar angrenzend an dem Schmelzreaktor vorgesehen sein kann.

In einer Ausführungsform kann der Schmelzreaktor mit einem Wechselsystem ausgestattet sein. Ein solches Wechselsystem kann insbesondere eine Auswechslung des Schmelzreaktors aus der Vorrichtung ermöglichen. Insbesondere kann das Wechselsystem Rollen oder Räder beinhalten.

Weiterhin kann die Vorrichtung eine Zuführeinrichtung für das zu behandelnde Gut, wie den Elektro- und/oder Elektronikschrott bzw. -komponenten, umfassen. Die Zuführeinrichtung für das zu behandelnde Gut kann beispielsweise in einem Abgasschacht bzw. Abhitzekessel vorgesehen sein, insbesondere an einem oberen Abschnitt davon.

Des Weiteren kann die Vorrichtung eine Abführeinrichtung für aus dem Elektro- und/oder Elektronikschrott bzw. -komponenten rückgewonnene Metalle umfassen. Die Abführeinrichtung kann als ein Austrag durch Abstich ausgestaltet sein. Die Abführeinrichtung kann beispielsweise in dem Schmelzreaktor, insbesondere in einem Boden des Schmelzreaktors oder einem sonstigen unteren Abschnitt des Schmelzreaktors, vorgesehen sein.

Ferner kann die Vorrichtung eine Abgasaustrittsöffnung umfassen. Die Abgasaustrittsöffnung kann zum Austritt bzw. zum Entweichen von Abgas aus der Vorrichtung konfiguriert sein. Die Abgasaustrittsöffnung kann beispielsweise in einem Abgasschacht bzw. Abhitzekessel vorgesehen sein, insbesondere an einem oberen Abschnitt oder einem oberen Ende davon. In einer Ausführungsform kann die Abgasaustrittsöffnung seitlich versetzt zu dem Abgasschacht angeordnet sein.

Die Anordnung zur metallurgischen Behandlung von Elektro- und/oder Elektronikschrott bzw. -komponenten umfasst eine erfindungsgemäße Vorrichtung und eine Abgasreinigungseinrichtung, die in fluider Kommunikation mit der Vorrichtung ist.

Die Abgasreinigungseinrichtung kann insbesondere in fluider Kommunikation mit einem Abgasschacht, insbesondere einer Abgasaustrittsöffnung, der Vorrichtung sein. "In fluider Kommunikation" im Sinne der vorliegenden Anmeldung kann insbesondere bedeuten, dass Abgas aus der Vorrichtung im Wesentlichen verlustfrei zu der Abgasreinigungseinrichtung gelangen kann.

Die Abgasreinigungseinrichtung kann insbesondere mindestens ein Filterelement enthalten. Die Abgasreinigungseinrichtung kann auch mehrere Filterelemente mit ggf. verschiedenen Filtereigenschaften aufweisen.

Das mindestens eine Filterelement kann insbesondere zum Entfernen von festen Partikeln, insbesondere von metallhaltigem Staub, geeignet sein. Hierdurch kann es insbesondere möglich sein, Wertmetalle im Abgas, wie zum Beispiel Zink, aber auch Blei und Zinn, zu sammeln und - ggf. nach weiterer Aufarbeitung - weiterzuverwerten. Hierdurch kann zum einen die Ausbeute an Wertmetallen bei der metallurgischen Behandlung von Elektro- und/oder Elektronikschrott bzw. -komponenten weiter erhöht werden, was der Wirtschaftlichkeit der Anordnung dienlich sein kann. Zum anderen kann eine Entfernung von festen Partikeln, insbesondere von metallhaltigem Staub, auch aus Umweltschutzgründen geboten sein.

Das mindestens eine Filterelement kann insbesondere auch zum Entfernen von schädlichen Gasen, wie Halogene, Dioxine oder Furane, geeignet sein, was ebenfalls insbesondere aus Umweltschutzgründen geboten sein kann.

Die erfindungsgemäße Vorrichtung bzw. die erfindungsgemäße Anordnung kann insbesondere zur (pyro)metallurgischen Behandlung eines zu behandelnden Guts und/oder zur Gewinnung von Rohkupfer oder einer Vorstufe verwendet werden, wobei das zu behandelnde Gut bis zu 100 Gew.-% Elektro- und/oder Elektronikschrott bzw. -komponenten enthält.

Die erfindungsgemäße Vorrichtung bzw. die erfindungsgemäße Anordnung kann insbesondere zur Gewinnung von Rohkupfer oder einer Vorstufe davon verwendet werden.

Wertmetalle im Rohkupfer können insbesondere Kupfer (z.B. 80 - 90 Gew.-%), Nickel (z.B. bis zu 5 Gew.-%), Zinn (z.B. ungefähr 0,5 Gew.-%), Blei (z.B. ungefähr 0,5 Gew.-%), Antimon (z.B. bis zu 3 Gew.-%), Edelmetalle wie Gold, Silber, Platin, Palladium (z.B. bis zu 0,5 Gew.-% in Summe), Seltenerdelemente, Indium, Gallium, Germanium (z.B. bis zu 1 Gew.-% in Summe) sein.

Bei dem Verfahren zur metallurgischen (insbesondere pyrometallurgischen) Behandlung von Elektro- und/oder Elektronikschrott bzw. -komponenten mit einem Schmelzreaktor ist der Schmelzreaktor mit Seitenwänden und einem Boden ausgebildet und so konfiguriert, dass bis zu 100 Gew.-% Elektro- und/oder Elektronikschrott bzw. -komponenten eingesetzt werden kann. Der Schmelzreaktor kann insbesondere Teil einer erfindungsgemäßen Vorrichtung sein bzw. das Verfahren kann mittels einer erfindungsgemäßen Vorrichtung durchgeführt werden. Insbesondere kann der Schmelzreaktor (aktiv) kühlbar sein bzw. das Verfahren eine (aktive) Kühlung des Schmelzreaktors und/oder dessen Inhalts umfassen. Das Verfahren kann insbesondere zur Gewinnung von Rohkupfer oder einer Vorstufe davon geeignet sein.

Bei dem Verfahren zur metallurgischen Behandlung von Elektro- und/oder Elektronikschrott bzw. -komponenten kann bis zu 100 Gew.-% Elektro- und/oder Elektronikschrott bzw. -komponenten als zu behandelndes Gut eingesetzt werden. In anderen Worten ist der bei dem Verfahren verwendete Schmelzreaktor so konfiguriert, dass der Anteil an Elektro- und/oder Elektronikschrott bzw. -komponenten an dem zu behandelnden Gut bis zu 100 Gew.-% betragen kann. Insbesondere kann das bei dem Verfahren zu behandelnde Gut mindestens 50 Gew.-% Elektro- und/oder Elektronikschrott bzw. -komponenten, insbesondere mindestens 60 Gew.-% Elektro- und/oder Elektronikschrott bzw. -komponenten, insbesondere mindestens 70 Gew.-% Elektro- und/oder Elektronikschrott bzw. -komponenten, insbesondere mindestens 80 Gew.-% Elektro- und/oder Elektronikschrott bzw. -komponenten, insbesondere mindestens 90 Gew.-% Elektro- und/oder Elektronikschrott bzw. -komponenten, insbesondere mindestens 95 Gew.-% Elektro- und/oder Elektronikschrott bzw. -komponenten, insbesondere mindestens 98 Gew.-% Elektro- und/oder Elektronikschrott bzw. - komponenten, umfassen.

Weiterhin kann das zu behandelnde Gut in manchen Ausführungsformen auch weniger als 100 Gew.-% Elektro- und/oder Elektronikschrott bzw. - komponenten, insbesondere weniger als 99 Gew.-% Elektro- und/oder Elektronikschrott bzw. -komponenten, insbesondere weniger als 98 Gew.-% Elektro- und/oder Elektronikschrott bzw. -komponenten, insbesondere weniger als 95 Gew.-% Elektro- und/oder Elektronikschrott bzw. -komponenten, insbesondere weniger als 90 Gew.-% Elektro- und/oder Elektronikschrott bzw. -komponenten, insbesondere weniger als 85 Gew.-% Elektro- und/oder Elektronikschrott bzw. -komponenten, insbesondere weniger als 80 Gew.-% Elektro- und/oder Elektronikschrott bzw. -komponenten, umfassen.

Sämtliche der oben genannten Untergrenzen und Obergrenzen des Anteils von Elektro- und/oder Elektronikschrott bzw. -komponenten an dem zu behandelnden Gut können beliebig miteinander kombiniert werden, soweit denkgesetzlich möglich.

In einer Ausführungsform kann der Elektro- und/oder Elektronikschrott bzw. die -komponenten bis zu 60 Gew.-% organische Bestandteile, wie zum Beispiel Kunststoffe (Plastik) oder sonstige brennbare Komponenten, enthalten, insbesondere bis zu 55 Gew.-% organische Bestandteile, insbesondere bis zu 50 Gew.-% organische Bestandteile, insbesondere bis zu 45 Gew.-% organische Bestandteile, insbesondere bis zu 40 Gew.-% organische Bestandteile, insbesondere bis zu 35 Gew.-% organische Bestandteile, insbesondere bis zu 30 Gew.-% organische Bestandteile, insbesondere bis zu 25 Gew.-% organische Bestandteile. Weiterhin kann der Elektro- und/oder Elektronikschrott bzw. die -komponenten in manchen Ausführungsformen mindestens 5 Gew.-% organische Bestandteile, wie zum Beispiel Kunststoffe (Plastik) oder sonstige brennbare Komponenten, enthalten, insbesondere mindestens 10 Gew.-% organische Bestandteile, insbesondere mindestens 15 Gew.-% organische Bestandteile, insbesondere mindestens 20 Gew.-% organische Bestandteile, insbesondere mindestens 25 Gew.-% organische Bestandteile, insbesondere mindestens 30 Gew.-% organische Bestandteile. Sämtliche der oben genannten Untergrenzen und Obergrenzen des Anteils an organischen Bestandteilen in dem Elektro- und/oder Elektronikschrott bzw. den -komponenten können beliebig miteinander kombiniert werden, soweit denkgesetzlich möglich.

Bei dem Verfahren zur metallurgischen Behandlung von Elektro- und/oder Elektronikschrott bzw. -komponenten können vorhandene organische Bestandteile in dem Elektro- und/oder Elektronikschrott bzw. den - komponenten verbrannt werden. Die hierbei entstehende (thermische) Energie kann insbesondere zum Aufschmelzen der metallischen und/oder oxidischen Bestandteile in dem Elektro- und/oder Elektronikschrott bzw. den - komponenten verwendet werden. Darüber hinaus oder alternativ hierzu kann die hierbei entstehende (thermische) Energie insbesondere zur Erzeugung von elektrischem Strom, Prozesswärme und/oder Fernwärme genutzt werden, beispielsweise mittels eines Abhitzekessels.

In einer Ausführungsform wird bei dem Verfahren, zum Beispiel zur Abfuhr von Energie aus dem Schmelzreaktor, (aktiv) gekühlt, insbesondere kann der Schmelzreaktor (aktiv) gekühlt werden. Dies kann insbesondere mittels ionischen Flüssigkeiten, Ölen, Salzschmelzen, niedrigschmelzenden Legierungen, niedrigschmelzenden Metallen, Wasser und/oder Wasserdampf und Kombinationen hiervon erfolgen.

Das Verfahren zur metallurgischen Behandlung von Elektro- und/oder Elektronikschrott bzw. -komponenten kann beispielsweise die folgenden Schritte umfassen:
Beladen einer Vorrichtung, insbesondere einer erfindungsgemäßen Vorrichtung, mit bis zu 100 Gew.-% Elektro- und/oder Elektronikschrott bzw. - komponenten, der optional vorab zerkleinert und/oder mechanisch aufbereitet wurde; und
Aufschmelzen des bzw. der Elektro- und/oder Elektronikschrotts bzw. der -komponenten (z. B. in einem Schmelzreaktor der Vorrichtung) unter Verbrennen organischer Anteile davon.

Weiterhin kann das Verfahren ein (aktives) Kühlen des Schmelzreaktors umfassen, zum Beispiel mittels ionischen Flüssigkeiten, Ölen, Salzschmelzen, niedrigschmelzenden Legierungen, niedrigschmelzenden Metallen, Wasser und/oder Wasserdampf und Kombinationen hiervon.

In einer Ausführungsform kann das Verfahren ferner ein zumindest teilweises Reduzieren von oxidierten Bestandteilen in der Schmelze umfassen bzw. ein Zuführen von einem reduzierenden Gas oder Gasgemisch über eine bodenseitige Gaszuführung in die Schmelze. Hierdurch kann es möglich sein, den Metallaustrag zu erhöhen.

In einer Ausführungsform kann zusätzliche Energie, insbesondere mittels Erdgas und/oder Plasma, eingebracht werden. Hierdurch kann es möglich sein, die notwendige Prozesstemperatur aufrechtzuerhalten.

In einer Ausführungsform kann das Prozessgas mit mindestens einem Filterelement und/oder Wäscher gereinigt werden.

Die vorliegende Erfindung wird weiterhin unter Bezugnahme auf die Figuren beschrieben, die aber lediglich der Verdeutlichung der erfindungsgemäßen Lehren dienen und in keiner Weise den Umfang der vorliegenden Erfindung beschränken sollen. Die einzelnen Figuren sind lediglich als schematisch anzusehen und sind nicht notwendigerweise maßstabsgetreu. Gleiche oder ähnliche Elemente in unterschiedlichen Figuren werden mit den gleichen Bezugszeichen bezeichnet.

**Figur 1** zeigt eine Seitenansicht eines Teils einer Vorrichtung zur metallurgischen Behandlung von Elektro- und/oder Elektronikschrott bzw. - komponenten 1 gemäß einer beispielhaften Ausführungsform.

Die in Figur 1 gezeigte Vorrichtung zur metallurgischen Behandlung von Elektro- und/oder Elektronikschrott bzw. -komponenten 1 umfasst drei Bereiche, einen Abgasschacht 20, einen Schmelzreaktor 10 und ein Wechselsystem 30.

Der Schmelzreaktor 10 ist wannenförmig ausgebildet mit Seitenwänden 16 und einem Boden 14. In den Seitenwänden 16 des Schmelzreaktors 10 ist eine Kühleinrichtung 12 vorgesehen, die zum Kühlen des Schmelzreaktors 10 und/oder des darin enthaltenen Guts, wie des bzw. der Elektro- und/oder Elektronikschrotts bzw. der -komponenten, konfiguriert ist. Im Boden 14 des Schmelzreaktors 10 ist eine bodenseitige Gaszuführeinrichtung 18 vorgesehen, die zum Zuführen eines reduzierenden Gases konfiguriert ist.

Der Abgasschacht 20 ist unmittelbar angrenzend zu dem Schmelzreaktor 10 angeordnet. Zwischen dem Abgasschacht 20 und dem Schmelzreaktor 10 ist eine gedachte Schnittlinie 34 eingezeichnet, die schräg bzw. geneigt verläuft. Der Abgasschacht 20 ist im Wesentlichen vollständig als Abhitzekessel 22, der zur Rückgewinnung von Abwärme konfiguriert ist, ausgestaltet. In dem Abgasschacht 20 ragt bis hinunter in den Schmelzreaktor 10 hinein eine Zuführeinrichtung für Gase und feinkörnige Feststoffe 24, die als eine Lanze bzw. als ein Rohr ausgestaltet ist.

Das Wechselsystem 30 befindet sich unterhalb des Schmelzreaktors 10 an dessen Boden 18. Das Wechselsystem 30 umfasst Rollen bzw. Räder 32, die ein Herausschieben bzw. Herausfahren des Schmelzreaktors 10 weg von der Vorrichtung 10 bzw. dessen Abgasschacht 20 ermöglichen. Aufgrund der geneigten Anordnung der Schnittlinie 34 lässt sich der Schmelzreaktor 10 in einfacher Weise nach links in der in Figur 1 gezeigten Konfiguration herausschieben bzw. herausfahren.

Die vorliegende Erfindung wurde an Hand spezifischer Ausführungsformen und Figuren beschrieben. Die Erfindung ist aber nicht hierauf beschränkt und verschiedene Modifikationen hiervon sind möglich, ohne den Umfang der vorliegenden Erfindung zu verlassen. Bezugszeichen in den Ansprüchen sind nicht als Einschränkung anzusehen.

### Bezugszeichenliste:

- 1: Vorrichtung zur metallurgischen Behandlung von Elektro- und/oder Elektronikschrott bzw. -komponenten
- 2: Anordnung zur metallurgischen Behandlung von Elektro- und/oder Elektronikschrott bzw. -komponenten
- 10: Schmelzreaktor
- 12: Kühleinrichtung
- 14: Boden
- 16: Seitenwand
- 18: bodenseitige Gaszuführeinrichtung
- 20: Abgasschacht
- 22: Abhitzekessel
- 24: Zuführeinrichtung für Gase und feinkörnige Feststoffe
- 30: Wechselsystem
- 32: Rollen bzw. Räder
- 34: Schnittlinie

## Patentansprüche

1. Vorrichtung (1) zur metallurgischen Behandlung von Elektro- und/oder Elektronikschrott bzw. -komponenten, wobei die Vorrichtung (1) einen Schmelzreaktor (10) umfasst, der eine Kühleinrichtung (12) aufweist, und wobei die Vorrichtung (1) zur metallurgischen Behandlung von bis zu 100 Gew.-% Elektro- und/oder Elektronikschrott bzw. -komponenten konfiguriert ist, wobei der Schmelzreaktor mit Seitenwänden (16) und einem Boden (14) ausgebildet ist und wobei sich die Kühleinrichtung (12) in mindestens einer der Seitenwände (16) des Schmelzreaktors (10) befindet.

2. Vorrichtung (1) nach Anspruch 1, wobei sich die Kühleinrichtung (12) in sämtlichen Seitenwänden (16) des Schmelzreaktors (10) befindet.

3. Vorrichtung (1) nach einem der vorhergehenden Ansprüche, wobei die Kühleinrichtung (12) zum Kühlen mittels einer ionischen Flüssigkeit geeignet ist.

4. Vorrichtung (1) nach einem der vorhergehenden Ansprüche, wobei die Vorrichtung (1) ferner einen Abgasschacht (20) umfasst, der über dem Schmelzreaktor (10) angeordnet ist.

5. Vorrichtung (1) nach einem der vorhergehenden Ansprüche, wobei die Vorrichtung (1) ferner eine Zuführeinrichtung für Gase und feinkörnige Feststoffe (24), insbesondere für Luft und/oder einen Brennstoff, aufweist.

6. Vorrichtung (1) nach einem der vorhergehenden Ansprüche, wobei der Schmelzreaktor (10) eine bodenseitige Gaszuführeinrichtung (18), insbesondere für ein reduzierendes Gas, wie Wasserstoff, aufweist.

7. Vorrichtung (1) nach einem der vorhergehenden Ansprüche, wobei der Schmelzreaktor (10) von der Vorrichtung (1) lösbar, insbesondere auswechselbar, angebracht ist.

8. Vorrichtung (1) nach Anspruch 7, wobei der Schmelzreaktor (10) mit einem Wechselsystem (30) ausgestattet ist, welches Rollen oder Räder (32) beinhaltet.

9. Anordnung (2) zur metallurgischen Behandlung von Elektro- und/oder Elektronikschrott bzw. -komponenten, wobei die Anordnung (2) Folgendes umfasst:
eine Vorrichtung (1) gemäß einem der Ansprüche 1 bis 8, und
eine Abgasreinigungseinrichtung, die in fluider Kommunikation mit der Vorrichtung (1) ist.

10. Verwendung der Vorrichtung (1) gemäß einem der Ansprüche 1 bis 8 oder der Anordnung (2) gemäß Anspruch 9 zur metallurgischen Behandlung eines zu behandelnden Guts und/oder zur Gewinnung von Rohkupfer oder einer Vorstufe davon, wobei das zu behandelnde Gut bis zu 100 Gew.-% Elektro- und/oder Elektronikschrott bzw. -komponenten enthält.

11. Verfahren zur metallurgischen Behandlung von Elektro- und/oder Elektronikschrott bzw. -komponenten mit einem Schmelzreaktor (10), wobei der Schmelzreaktor (10) mit Seitenwänden (16) und einem Boden (14) ausgebildet und so konfiguriert ist, dass bis zu 100 Gew.-% Elektro- und/oder Elektronikschrott bzw. -komponenten eingesetzt werden kann, wobei sich eine Kühleinrichtung (12) in mindestens einer der Seitenwände (16) des Schmelzreaktors (10) befindet.

12. Verfahren nach Anspruch 11, wobei die Behandlung des bzw. der Elektro- und/oder Elektronikschrotts bzw. -komponenten zur Gewinnung von Rohkupfer oder einer Vorstufe davon geeignet ist.

13. Verfahren nach Anspruch 11 oder 12, wobei eine Kühlung mittels ionischen Flüssigkeiten, Ölen, Salzschmelzen, niedrigschmelzenden Legierungen, niedrigschmelzenden Metallen, Wasser und/oder Wasserdampf eingesetzt wird.

14. Verfahren nach einem der Ansprüche 11 bis 13, wobei die Energie aus der Verbrennung der organischen Bestandteile zur Erzeugung von elektrischem Strom, Prozesswärme und/oder Fernwärme genutzt wird.

15. Verfahren nach einem der Ansprüche 11 bis 14, wobei durch eine bodenseitige Gaszuführung Wasserstoff, Spaltgas, und/oder Erdgas mit oder ohne Beimengung von Argon, Stickstoff und/oder Luft zugeführt wird.

## Claims

1. A device (1) for the metallurgical treatment of electrical and/or electronic scrap or components, wherein the device (1) comprises a smelting reactor (10), which has a cooling facility (12), and wherein the device (1) is configured for the metallurgical treatment of up to 100 % by weight of electrical and/or electronic scrap or components, wherein the smelting reactor is designed with side walls (16) and a floor (14), and wherein the cooling facility (12) is located in at least one of the side walls (16) of the smelting reactor (10).

2. The device (1) according to claim 1, wherein the cooling facility (12) is located in all side walls (16) of the smelting reactor (10).

3. The device (1) according to one of the preceding claims, wherein the cooling facility (12) is suitable for cooling by means of an ionic fluid.

4. The device (1) according to one of the preceding claims, wherein the device (1) further comprises a flue gas shaft (20), which is arranged above the smelting reactor (10).

5. The device (1) according to one of the preceding claims, wherein the device (1) further comprises a supply facility for gases and fine-grained solids (24), in particular for air and/or a fuel.

6. The device (1) according to one of the preceding claims, wherein the smelting reactor (10) has a floor-side gas supply facility (18), in particular for a reducing gas, such as hydrogen.

7. The device (1) according to one of the preceding claims, wherein the smelting reactor (10) is detachably, in particular interchangeably, attached to the device (1).

8. The device (1) according to claim 7, wherein the smelting reactor (10) is fitted with a changeover system (30) which includes rollers or wheels (32).

9. An arrangement (2) for the metallurgical treatment of electrical and/or electronic scrap or components, wherein the arrangement (2) comprises the following:
a device (1) according to one of the claims 1 to 8, and
a flue gas cleaning facility, which is in fluid communication with the device (1).

10. Use of the device (1) according to one of the claims 1 to 8, or of the arrangement (2) according to claim 9, for the metallurgical treatment of a material to be treated, and/or for the recovery of crude copper, or a precursor thereof, wherein the material to be treated contains up to 100 % by weight of electrical and/or electronic scrap or components.

11. A process for the metallurgical treatment of electrical and/or electronic scrap or components with a smelting reactor (10), wherein the smelting reactor (10) is designed with side walls (16) and a floor (14), and is configured such that up to 100 % by weight of electrical and/or electronic scrap or components can be used, wherein a cooling facility (12) is located in at least one of the side walls (16) of the smelting reactor (10).

12. The method according to claim 11, wherein the treatment of the electrical and/or electronic scrap or components is suitable for the recovery of crude copper, or a precursor thereof.

13. The method according to claim 11 or 12, wherein cooling by means of ionic liquids, oils, molten salts, low-melting alloys, low-melting metals, water, and/or water vapour, is used.

14. The method according to one of the claims 11 to 13, wherein the energy from the combustion of the organic components is utilised for the generation of electrical power, process heat, and/or district heat.

15. The method according to one of the claims 11 to 14, wherein hydrogen, cracked gas, and/or natural gas, with or without an admixture of argon, nitrogen, and/or air, is supplied through a floor-side gas supply.

## Revendications

1. Dispositif (1) pour le traitement métallurgique de matériaux électriques et/ou de déchets ou composants électroniques, dans lequel le dispositif (1) comprend un réacteur de fusion (10), qui présente un dispositif de refroidissement (12), et dans lequel le dispositif (1) est configuré pour le traitement métallurgique de jusqu'à 100 % en poids de matériaux électriques et/ou de déchets ou de composants électroniques, dans lequel le réacteur de fusion est conçu avec des parois latérales (16) et un fond (14) et dans lequel le dispositif de refroidissement (12) se trouve dans au moins une des parois latérales (16) du réacteur de fusion (10) .

2. Dispositif (1) selon la revendication 1, dans lequel le dispositif de refroidissement (12) est situé dans toutes les parois latérales (16) du réacteur de fusion (10).

3. Dispositif (1) selon une quelconque des revendications précédentes, dans lequel le dispositif de refroidissement (12) est adapté au refroidissement au moyen d'un liquide ionique.

4. Dispositif (1) selon une quelconque des revendications précédentes, dans lequel le dispositif (1) comprend en outre une cheminée d'échappement (20), qui est disposée au-dessus du réacteur de fusion (10).

5. Dispositif (1) selon une quelconque des revendications précédentes, dans lequel le dispositif (1) comporte également un dispositif d'alimentation en gaz et solides fins (24), notamment en air et/ou en combustible.

6. Dispositif (1) selon une quelconque des revendications précédentes, dans lequel le réacteur de fusion (10) comporte un dispositif d'alimentation en gaz du côté du fond (18), notamment d'un gaz réducteur tel que l'hydrogène.

7. Dispositif (1) selon une des revendications précédentes, dans lequel le réacteur de fusion (10) du dispositif (1) est monté de manière amovible, notamment remplaçable.

8. Dispositif (1) selon la revendication 7, dans lequel le réacteur de fusion (10) est équipé d'un système de changement (30), qui comprend des rouleaux ou des roues (32).

9. Agencement (2) pour le traitement métallurgique des matériaux électriques et/ou de déchets ou composants électroniques, dans lequel l'agencement (2) comprend les éléments suivants :
un dispositif (1) selon une quelconque des revendications 1 à 8, et
un dispositif de purification des gaz d'échappement, qui est en communication fluidique avec le dispositif (1).

10. Utilisation du dispositif (1) selon une quelconque des revendications 1 à 8 ou de l'agencement (2) selon la revendication 9 pour le traitement métallurgique d'une pièce à traiter et/ou pour l'extraction du cuivre brut ou d'un précurseur de celui-ci, dans lequel la pièce à traiter contient jusqu'à 100 % en poids de matériaux électriques et/ou de déchets ou composants électroniques.

11. Procédé de traitement métallurgique de déchets ou de composants électriques et/ou électroniques avec un réacteur de fusion (10), dans lequel le réacteur de fusion (10) est conçu avec des parois latérales (16) et un fond (14) et configuré de sorte que jusqu'à 100 % en poids de déchets ou de composants électriques et/ou électroniques soient utilisés, dans lequel un dispositif de refroidissement (12) est situé dans au moins une des parois latérales (16) du réacteur de fusion (10).

12. Procédé selon la revendication 11, dans lequel le traitement des déchets ou composants électriques et/ou électroniques convient pour la production de cuivre brut ou d'un précurseur de celui-ci.

13. Procédé selon la revendication 11 ou 12, dans lequel on utilise un refroidissement au moyen de liquides ioniques, d'huiles, de sels fondus, d'alliages à bas point de fusion, de métaux à bas point de fusion, d'eau et/ou de vapeur.

14. Procédé selon une quelconque des revendications 11 à 13, dans lequel l'énergie issue de la combustion des composants organiques est utilisée pour générer de l'électricité, de la chaleur industrielle et/ou du chauffage urbain.

15. Procédé selon une quelconque des revendications 11 à 14, dans lequel par une alimentation en gaz du côté du fond, de l'hydrogène, du gaz craqué, et/ou du gaz naturel avec ou sans adjonction d'argon, d'azote et/ou d'air est fourni.
